# EUROPEAN PATENT APPLICATION

(11) **EP 1 026 626 A1**
(43) Date of publication of application: **09.08.2000**
(21) Application number: 00300665.7
(22) Date of filing: 28.01.2000
(51) Int. Cl.: G06K 19/07, G06K 7/00, G07F 7/10, G06F 1/00

(54) **Mobile electronic information apparatus**

(30) Priority: 02.02.1999 JP 2533199
(71) Applicant: SONY CORPORATION, Tokyo (JP)
(72) Inventor: Nakajima, Yasuhisa, Shinagawa-ku, Tokyo (JP)
(74) Representative: Boden, Keith McMurray

(57) **Abstract**

A mobile electronic information apparatus (10) is disclosed which allows a large amount of data to be partially overwritten. The mobile electronic information apparatus (10) is formed of a main unit (12) and a non-contact integrated-memory tag (11). The main unit (12) includes an antenna (12a), which serves as a reading unit for reading updating data stored in the tag (11). A reader/writer (12b) controls the read updating data. An image generating circuit (12c) converts the transmitted data into an image signal. A display unit (12d) displays the image signal converted by the image generating circuit (12c). A control circuit (12e) serves as an overwriting unit for performing overwriting of the updating data. A memory (12f) stores data. The tag (11) is brought close to the antenna (12a), and then, the antenna (12a) detects the updating data stored in the tag (11). The updating data is then transmitted to the reader/writer (12b), and the reader/writer (12b) overwrites the data stored in the memory (12f) with the updating data according to a processing method recorded on the updating data.

## Description

The present invention generally relates to mobile electronic information apparatus, and, in particular, to a mobile electronic game machine which stores software and overwrites the same without requiring connection of the game machine.

Mobile electronic game machines in which the content of a game can be changed are becoming widespread. This type of game machine is formed of a game-machine main unit and a read only memory (ROM) module on which the content of a game is recorded, and the content of the game is changed by exchanging ROM modules.

Some mobile electronic game machines can be connected to each other with a cable, and data can be transmitted and received between the two game machines via the cable. Such data communications are referred to as "unicast", and the data can be partially overwritten within the same game.

However, when the content of a game is changed by exchanging ROM modules as discussed above, the whole game content is changed, and just a part of the data, such as characters appearing in the game, cannot be overwritten or added.

When data communications are performed by unicast, a cable is required to connect the main units of game machines, which is cumbersome. Additionally, a specific apparatus is required if it is desired that a certain part of data be widely distributed.

Accordingly, in view of the above background, it is an aim of the present invention to provide a mobile electronic information apparatus, such as a mobile electronic game machine, which allows data to be partially overwritten by using a non-contact integrated-memory tag.

Accordingly, the present invention provides a mobile electronic information apparatus integrating software data. The mobile electronic information apparatus includes a non-contact integrated-memory tag for integrating a non-contact memory storing updating data, and a main unit which includes a reading unit for reading the updating data without bringing the main unit into contact with the non-contact integrated-memory tag and an overwriting unit for overwriting the software data with the updating data.

Preferred embodiments of the present invention will now be described hereinbelow by way of example only with reference to the accompanying drawings, in which:
Fig. 1 is a schematic diagram illustrating the configuration of a mobile electronic game machine according to an embodiment of the present invention;
Fig. 2 schematically illustrates the overall data structure of updating data;
Fig. 3 schematically illustrates the structure of a memory management information area of the updating data;
Fig. 4 schematically illustrates the structure of a program information area of the updating data;
Fig. 5 schematically illustrates a reading operation of the updating data from a non-contact integrated-memory tag by a main unit of the mobile electronic game machine;
Fig. 6 schematically illustrates an erasing operation of the updating data stored in the non-contact integrated-memory tag by the main unit of the mobile electronic game machine; and
Fig. 7 is a flow chart illustrating the processing in a reader/writer.

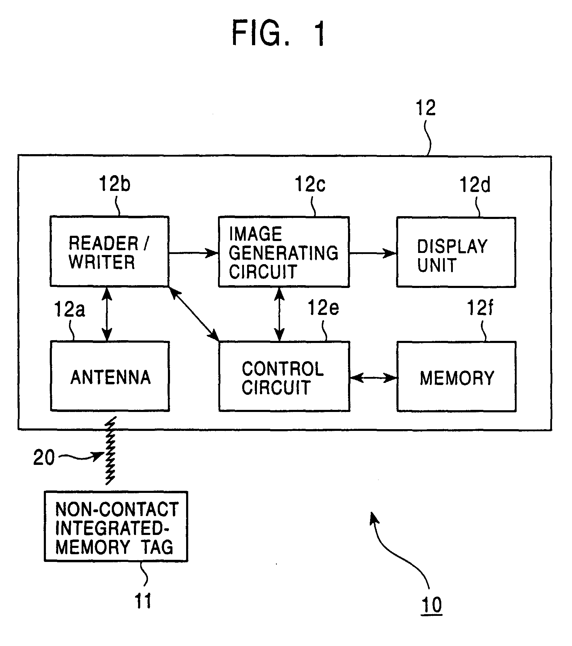

Referring to the block diagram illustrating the configuration of an embodiment of the present invention shown in Fig. 1, a mobile electronic game machine 10 is formed of a non-contact integrated-memory tag 11 and a game-machine main unit 12. The non-contact integrated-memory tag 10, which stores updating data 20 therein, is embedded in a paper medium, such as a magazine, and is distributed. The game-machine main unit 12 includes an antenna 12a, which serves as a reading unit for reading the updating data 20 stored in the non-contact integrated-memory tag 11, a reader/writer 12b for controlling the read updating data 20, an image generating circuit 12c for converting received data to an image signal, a display unit 12d for displaying the image signal converted by the image generating circuit 12c, a control circuit 12e, which serves as a writing unit for overwriting data with the updating data 20, and a memory 12f for recording data.

The antenna 12a is electrically connected to the reader/writer 12b. The reader/writer 12b is electrically connected to the image generating circuit 12c and the control circuit 12e. The image generating circuit 12c is electrically connected to the display unit 12d and the control circuit 12e. The control circuit 12e is electrically connected to the memory 12f.

The data structure of the updating data 20 recorded in the tag 11 is as follows.

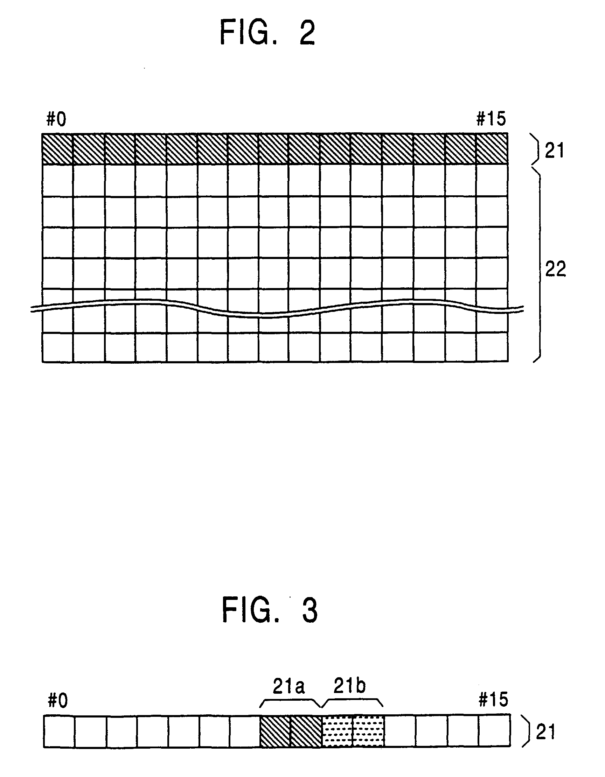

Fig. 2 schematically illustrates the overall data structure of the updating data 20. The updating data 20 is largely divided into a memory management information area 21 indicating the characteristics of the updating data 20, and a program information area 22 in which practical data of the updating data 20 is stored.

Fig. 3 schematically illustrates the structure of the memory management information area 21 of the updating data 20. The memory management information area 21 contains media data 21a and application data 21b and is used for performing data control on the updating data 20. The media data 21a indicates a mobile electronic game machine corresponding to the updating data 20, and upon reading the updating data 20, the media data 21a is used for determining whether the updating data 20 is compatible with the corresponding game machine. The application data 21b stores information on the processing method for the updating data 20, and upon reading the updating data 20, the application data 21b is used for determining the processing method for the updating data 20.

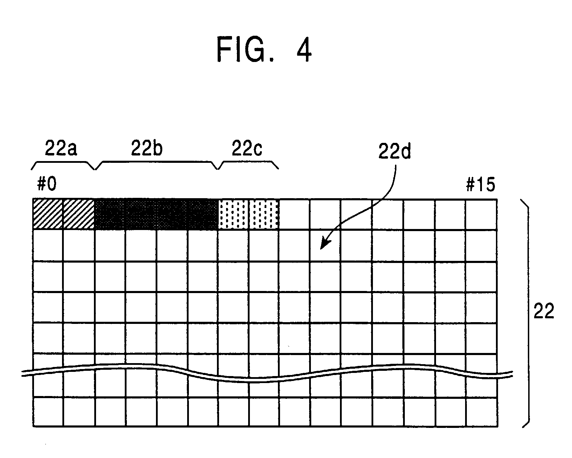

Fig. 4 schematically illustrates the structure of the program information area 22 of the updating data 20. The program information area 22 contains application data 22a, memory-area designating data 22b, a data length 22c, and data 22d.

The application data 22a indicates the processing method for the data 22d, and the memory-area designating data 22b represents a recording area of the memory 12f to be overwritten or added to by the data 22d. The data length 22c designates the length of the data 22d, and the data 22d represents the practical data to be written into the memory 12f.

The operation of the mobile electronic game machine 10 is discussed below.

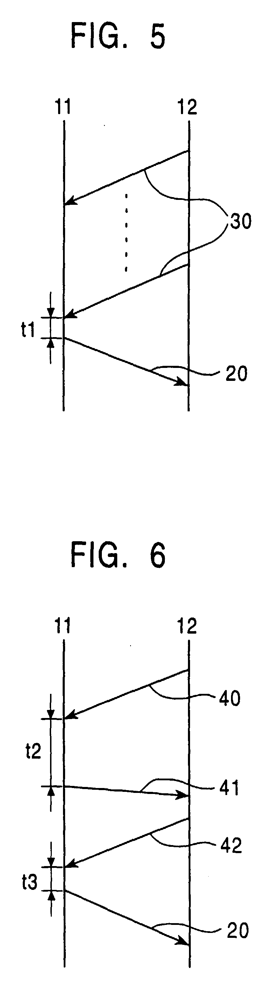

Fig. 5 schematically illustrates the operation of reading the updating data 20 from the non-contact integrated-memory tag 11 by the game-machine main unit 12. In Fig. 5, the vertical axis represents time.

The game-machine main unit 12 sends a read command 30 to the tag 11 at regular intervals via the antenna 12a. The read command 30 includes a memory address of the tag 11. The tag 11 is first brought close to the antenna 12a of the game-machine main unit 12. Upon detecting the read command 30, after a lapse of a certain processing time t1, the tag 11 transmits the updating data 20 corresponding to the memory address designated by the read command 30 to the game-machine main unit 12. The transmitted updating data 20 is received by the antenna 12a, and upon detecting the updating data 20, the game-machine main unit 12 stops transmitting the read command 30 and starts processing the received updating data 20.

The updating data 20 received by the antenna 12a is first sent to the reader/writer 12b. The reader/writer 12b reads out the memory management information area 21 of the updating data 20 and determines whether the media data 21a stored in the memory management information area 21 corresponds to the game-machine main unit 12. Simultaneously, the reader/writer 12b transmits a processing-status signal, to the image generating circuit 12c, indicating that communications with the non-contact integrated-memory tag 11 have started, and displays that information on the display unit 12d.

If it is determined that the media data 21a corresponds to the game-machine main unit 12, the reader/writer 12b sends a processing-status signal to the image generating circuit 12c and displays on the display unit 12d that communications are being performed, and also determines the contents of the application data 21b stored in the memory management information area 21. The application data 21b indicates the processing method for the updating data 20, and the processing method corresponding to the application data 21b is recorded on a ROM (not shown). The reader/writer 12b checks the read application data 21b against the processing method recorded on the ROM, and executes the corresponding processing.

For example, it is now assumed that the processing method recorded on the ROM specifies "if the application data 21b indicates 01 in hexadecimal, the data of the memory 12f is completely overwritten by the updating data 20". In this case, if the application data 21b read by the reader/writer 12b indicates 01 in hexadecimal, the reader/writer 12b reads the program information area 22 stored in the updating data 20 and sends it to the control circuit 12e. The control circuit 12e reads the application data 22a stored in the program information area 22 to reconfirm the processing content, and then erases the whole data stored in the memory 12f. Subsequently, the control circuit 12e reads the memory-area designating data 22b and the data length 22c so as to read the data 22d having a length designated by the data length 22c. The read data 22d is written into an area of the memory 12f specified by the memory-area designating data 22b.

Alternatively, it is now assumed that the processing method recorded on the ROM specifies "if the application data 21b indicates 02 in hexadecimal, only part of data stored in the memory 12f is overwritten by the updating data 20". In this case, if the application data 21b read by the reader/writer 12b represents 02 in hexadecimal, the reader/writer 12b reads out the program information area 22 stored in the updating data 20 and transmits it to the control circuit 12e. The control circuit 12e reads the application data 22a stored in the program information area 22 to reconfirm the processing content, and then reads the memory-area designating data 22b, the data length 22c, and the data 22d stored in the program information area 22. Subsequently, the control circuit 12e erases the data stored in the recording area of the memory 12f specified by the memory-area designating data 22b, and writes the data 22d having a length indicated by the data length 22c into the recording area of the memory 12f specified by the memory-area designating data 22b.

It is now assumed that the processing method recorded on the ROM specifies "if the application data 21b indicates 03 in hexadecimal, the updating data 20 is added to the data of the memory 12f". In this case, if the application data 21b read by the reader/writer 12b designates 03 in hexadecimal, the reader/writer 12b reads the program information area 22 stored in the updating data 20 and sends it to the control circuit 12e. The control circuit 12e reads out the application data 22a stored in the program information area 22 to reconfirm the processing content, and then reads the memory-area designating data 22b, the data length 22c, and the data 22d stored in the program information area 22. Thereafter, the control circuit 12e writes the data 22d having a length designated by the data length 22c into the recording area of the memory 12f specified by the memory-area designating data 22b.

Upon completing the above-described processing, the updating data 20 stored in the non-contact integrated-memory tag 11 is erased so that it can be prevented from being used by another game-machine main unit.

Fig. 6 schematically illustrates the erasing operation of the updating data 20 stored in the non-contact integrated-memory tag 11 by the game-machine main unit 12. In Fig. 6, the vertical axis represents time.

The updating data 20 is erased by overwriting the whole data of the memory management information area 21 and the program information area 22 by only "0" or "1". The game-machine main unit 12 first sends a write command 40 containing erasing data indicating only "0" or "1" to the non-contact integrated-memory tag 11. The write command 40 contains a memory address of the tag 11. Upon receiving the write command 40, the tag 11 writes the data indicating only "0" or "1" into the updating data 20 stored in the memory address specified by the write command 40. After a lapse of processing time t2 required for writing the above data, the tag 11 sends a writing completion signal 41, to the game-machine main unit 12, indicating that the updating data 20 has been erased. Upon receiving the writing completion signal 41, the game-machine main unit 12 transmits a read command 42 to the tag 11. The read command 42 contains a memory address of the tag 11. Upon receiving the read command 42, the tag 11 reads out the updating data 20 stored in the area specified by the memory address, and after a lapse of processing time t3 required for reading the updating data 20, the tag 11 sends the updating data 20 to the game-machine main unit 12. The game-machine main unit 12 then checks whether the updating data 20 has been correctly erased. If the updating data 20 has been correctly erased, the processing is completed. Otherwise, the write command 40 is re-sent to the tag 11, and the erasing processing is performed once again.

Upon completing all the processing, the reader/writer 12b transmits a processing status signal, to the image generating circuit 12c, indicating that communications have been completed, and displays that information on the display unit 12d.

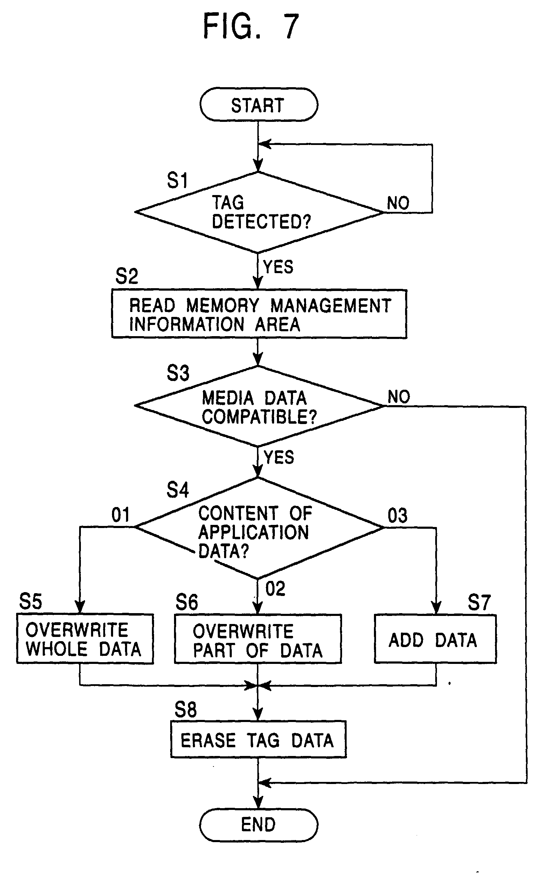

Fig. 7 is a flow chart illustrating the process of the reader/writer 12b. It is first determined in step S1 whether the antenna 12a has detected the non-contact integrated-memory tag 11. If the outcome of step S1 is yes, the process proceeds to step S2 in which the memory management information area 21 is read out from the tag 11. If the result of step S1 is no, step S1 is repeated.

It is then determined in step S3 whether the media data 21a corresponds to the game-machine main unit 12. If the outcome of step S3 is yes, the process proceeds to step S4. If the result of step S3 is no, the processing is completed.

In step S4, the content of the application data 21b is determined. If the application data 21b indicates "01" in hexadecimal, the process proceeds to step S5. If the application data 21b designates "02" in hexadecimal, the process proceeds to step S6. If the application data 21b represents "03" in hexadecimal, the process proceeds to step S7.

In step S5, the program information area 22 is read out from the tag 11 and is transmitted to the control circuit 12e, which then overwrites the whole memory 12f with the data 22d.

In step S6, the program information area 22 is read out from the tag 11 and is transmitted to the control circuit 12e, which then overwrites part of the memory 12f with the data 22d.

In step S7, the program information area 22 is read out from the tag 11 and is transmitted to the control circuit 12e, which adds the data 22d of the program information area 22 to the memory 12f.

After step S5, S6, or S7, in step S8, the updating data 20 stored in the tag 11 is erased.

As described above, according to this embodiment, by using the non-contact integrated-memory tag 11 storing the updating data 20, the contents of the memory 12f of the game-machine main unit 12 are overwritten, thereby making it possible to overwrite or add only part of data, such as characters appearing in a game.

By using the non-contact integrated-memory tag 11, data can be overwritten without having to bring the game-machine main unit 12 into contact with the tag 11, thereby eliminating the need for connecting to game-machine main units with a cable.

Additionally, by using the non-contact integrated-memory tag 11, data can be widely distributed, thereby promoting data updating without requiring a specific communication apparatus.

In the foregoing embodiment, for erasing the data of the tag 11, the write command 40 contains erasing data indicating only "0" or "1". However, the erasing data may not be contained in the write command 40 and be stored in the tag 11. In this case, upon receiving the write command 40, the tag 11 may write the erasing data stored in the tag 11 into the updating data 20.

As is seen from the foregoing description, the present invention offers the following advantages. According to the mobile electronic game machine which includes the non-contact integrated-memory tag in which updating data is stored and the game-machine main unit which includes a reading unit for reading the updating data without bringing the game machine into contact with the tag, data can be overwritten. Thus, data can be partially overwritten and added, and the need for connecting to game-machine main units with a cable is obviated. By using the non-contact integrated-memory tag, data can be widely distributed, thereby facilitating data updating without requiring a specific communication apparatus.

## Claims

1. A mobile electronic information apparatus integrating software data, comprising:
a non-contact integrated-memory tag for integrating a non-contact memory storing updating data; and
a main unit including reading means for reading the updating data without requiring said main unit to be brought into contact with said non-contact integrated-memory tag, and overwriting means for overwriting the software data with the updating data.

2. A mobile electronic information apparatus according to claim 1, wherein said non-contact integrated-memory tag is embedded in a paper medium.

3. A mobile electronic information apparatus according to claim 1, wherein the updating data overwrites the whole software data.

4. A mobile electronic information apparatus according to claim 1, wherein the updating data overwrites part of the software data.

5. A mobile electronic information apparatus according to claim 1, wherein the updating data is added to the software data.

6. A mobile electronic information apparatus according to claim 1, wherein said main unit includes erasing means for erasing the updating data of said non-contact integrated-memory tag after reading the updating data.

7. A mobile electronic information apparatus according to claim 1, wherein said non-contact integrated-memory tag comprises erasing means for erasing the updating data of said non-contact integrated-memory tag after reading the updating data.
